Europäisches Patentamt

European Patent Office

Office européen des brevets

(19)

(11) Publication number: **0 161 072
B1**

# EUROPEAN PATENT SPECIFICATION

(45) Date of publication of patent specification: **21.09.88**

(21) Application number: **85302449.5**

(22) Date of filing: **04.04.85**

(51) Int. Cl.⁴: **F 16 H 55/08,** F 16 H 1/32

(54) Mechanical reduction gear system.

(30) Priority: **04.04.84 JP 65937/84**

(43) Date of publication of application:
**13.11.85 Bulletin 85/46**

(45) Publication of the grant of the patent:
**21.09.88 Bulletin 88/38**

(84) Designated Contracting States:
**DE FR GB IT**

(56) References cited:
**FR-A-1 203 942
US-A-2 666 336
US-A-3 546 972**

(73) Proprietor: **EBARA CORPORATION
11-1, Haneda Asahi-cho
Ota-ku, Tokyo, 144 (JP)**

(72) Inventor: **Yuasa, Tatsuji
c/o Ebara Corporation 11-1, Haneda Asahi-cho
Ota-ku Tokyo-to (JP)**

(74) Representative: **Luckhurst, Anthony Henry
William et al
STANLEY, POPPLEWELL, POOLE
57 Lincoln's Inn Fields
London WC2A 3LS (GB)**

Courier Press, Leamington Spa, England.

## Description

This invention relates to a mechanical reduction gear system, and more particularly to a mechanical reduction gear system which uses a differential epicyclic gear mechanism.

US Patent Specification No. 3546972 discloses a planetary reduction gearing mechanism including an internal ring gear meshing with one or more pinions. The ring gear and the pinions have involute teeth, and the difference between the number of teeth on the ring gear and the number of teeth on each pinion is either 1 or 2. The contact ratio is greater than 1. The involute teeth are profile-shifted in accordance with addendum modifications which satisfy a particular equation or formula.

US Patent Specification No. 2666336 discloses a rotary gear mechanism in which the teeth have profiles which are based on modified cycloidal forms. Likewise French Patent Specification No. 1203942 also discloses a tooth profile (for a crown wheel and pinion arrangement) which is based on a modified cycloidal form.

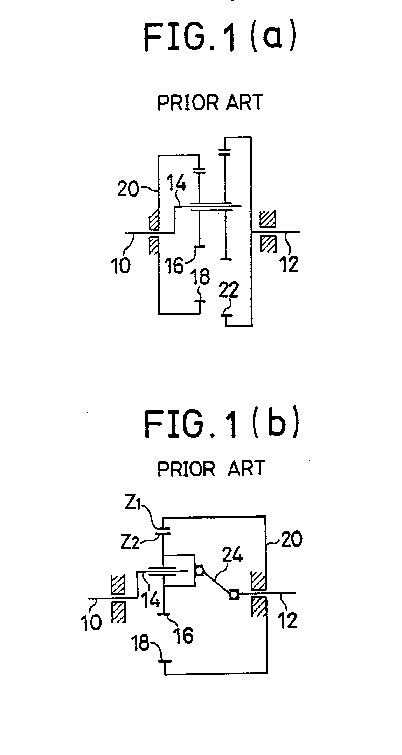

Recently, a differential epicyclic reduction gear mechanism has been extensively used as a control mechanism for robots and the like. Such a conventional differential epicyclic reduction gear mechanism as typically used in the art is constructed in a manner as shown in Fig. 1. More particularly, the differential epicyclic reduction gear mechanism in each of Figs. 1(a) and 1(b) has an input shaft 10 and and output shaft 12 arranged at left and right sides thereof, respectively. The input shaft 10 has an eccentric shaft 14 connected thereto, on which an external gear 16 is rotatably mounted. The external gear 16 is meshed or engaged with an internal gear 18 fixedly mounted in a casing 20. Thus, when the input shaft 10 is rotated, the external gear 16 revolved round the input shaft 10 while revolving on its axis. The differential epicyclic reduction gear mechanism of Fig. 1(a) constructed as described above is adapted to allow the rotation of the external gear 16 to drive an internal gear 22 mounted on the output shaft 12, whereas the differential epicyclic reduction gear mechanism shown in Fig. 1(b) is adapted to carry out the transmission of rotation of the external gear 16 to the output shaft 12 by means of a universal joint 24.

Such a differential epicyclic reduction gear mechanism constructed as described above has an advantage in as much as it is capable of achieving a large reduction ratio. For example, in the mechanism shown in Fig. 1(b), the relationship of tooth number of the external gear 16 and that of the internal gear 18 to the reduction ratio will be indicated by the following equation (1):

$$1/i = (Z_2 - Z_1)/Z_2 \qquad (1)$$

Thus, it will be noted that the smaller the difference in tooth number $(Z_2 - Z_1)$ is, the larger the reduction gear ratio is ($Z_1$ being the number of teeth on the internal gear 18, $Z_2$ being the number of teeth on the external gear 16, and i being the gear ratio).

In addition to the above-described differential epicyclic reduction gear mechanism, a reduction gear mechanism manufactured and sold under trademark "Harmonic Drive Systems" by Harmonic Drive Systems Co., Ltd. is known in the art which is adapted to use, instead of such a rigid epicyclic external gear as described above, a gear which is formed of a thin-wall cylindrical member and elastically deformed into an elliptic shape.

However, because such drive systems utilise the phenomenon of elastic deformation of the gear, they have a disadvantage that it is difficult to effect transmission of a large output. Thus, the rigid gear mechanism shown in Fig. 1 has become once more appreciated, not only because of the disadvantage of the alternative drive systems, but also because they do possess the advantage noted above.

Nevertheless, the rigid gear mechanism or differential epicyclic reduction gear mechanism shown in Fig. 1 has an important problem, in that it is substantially impossible to construct the mechanism in such a way as to reduce the difference in tooth number between the internal gear and the external gear because the mechanism has a relatively low contact ratio (i.e. the number of teeth intermeshing concurrently) and is highly subjected to restriction due to tooth profile interference.

Accordingly, it is desirable to develop a mechanical reduction gear system which has a relatively high contact ratio in spite of the use of a rigid gear and which has improved operating contact when under load.

Accordingly, it is object of the present invention to provide a mechanical reduction gear system which has a relatively high geometric contact ratio.

It is another object of the present invention to provide a mechanical reduction gear system which has a relatively high actual contact ratio when under load, loading operation, due to a slight deflection (as small as several microns) of a tooth.

In accordance with the present invention, there is provided a mechanical reduction gear system comprising an external gear (16) which is rotatable about an ecentrically revolving shaft (14) and an internal ring gear (18) engaged with said external gear (16) characterised in that said external gear (16) has a tooth profile curve which is the combination of an addendum tooth profile curve outside the pitch circle and an epicycloid curve inside the pitch circle that is generated on the basis of a rolling or generating circle having a theoretical tooth number that is fewer by up to three than the tooth number of said pitch circle wherein said external gear (16) has a pressure angle ($\alpha_E$) determined from the expression

0 161 072

$$\cos^{-1} \frac{\text{radius of the rolling circle}}{\text{radius of the pitch circle}}$$

on said pitch circle and that said internal ring gear (18) has a tooth profile curve inside the pitch circle which is generated on the basis of the tooth profile of said external gear (16).

The invention will be further described by way of example with reference to the accompanying drawings, in which:

Figs. 1(a) and 1(b) each are a schematic view showing a conventional differential epicyclic reduction gear which is capable of exhibiting an advantage due to the engagement of an internal gear with an external gear which has a slightly lower tooth number than the external gear;

Fig. 2 is a diagrammatic view showing a principle of generating of an epicycloid curve based on the rolling movement of a pitch circle;

Fig. 3 is a diagrammatic view showing a model of a tooth profile curve of an external gear obtained using the epicycloid curve generated in Fig. 2;

Fig. 4 is a diagrammatic view showing a model of a tooth profile of an internal gear which is capable of engaging with the epicycloid tooth profile of the external gear shown in Fig. 3;

Fig. 5 is a diagrammatic view showing a phase angle in a range of the engagement between the epicycloid tooth profile shown in Fig. 3 and the tooth profile of internal tooth shown in Fig. 4;

Fig. 6 is a diagrammatic view showing a principle of generating of an epitrochoid tooth profile curve in the present invention;

Fig. 7 is a diagrammatic view showing the comparison between the epitrochoid tooth profile curve generated in the present invention and a cycloid curve;

Fig. 8 is a diagrammatic view showing a principle of generating of a tooth profile curve of an internal gear using a known tooth profile of an external gear; and

Fig. 9 is a diagrammatic view showing a principle of shift generating of a tooth profile curve of an internal gear using the same known tooth profile as in Fig. 8.

The calculation of limitation of the tooth profile interference between an external gear and an internal gear may be carried out on the basis of either a dedendum tooth profile of which a tooth profile curve is designed at the inside of a pitch point or an addendum tooth profile of which a tooth profile curve is designed at the outside thereof. The design of a tooth profile of a gear based on the dedendum tooth profile causes the tooth profile to be formed into a frusto-conical shape to significantly decrease the strength of the gear as compared with that of a bell-like shape obtained on the basis of the addendum tooth profile.

In view of the foregoing, the present invention has employed an addendum tooth profile.

Now, the present invention will be described hereinafter with reference to the accompanying drawings.

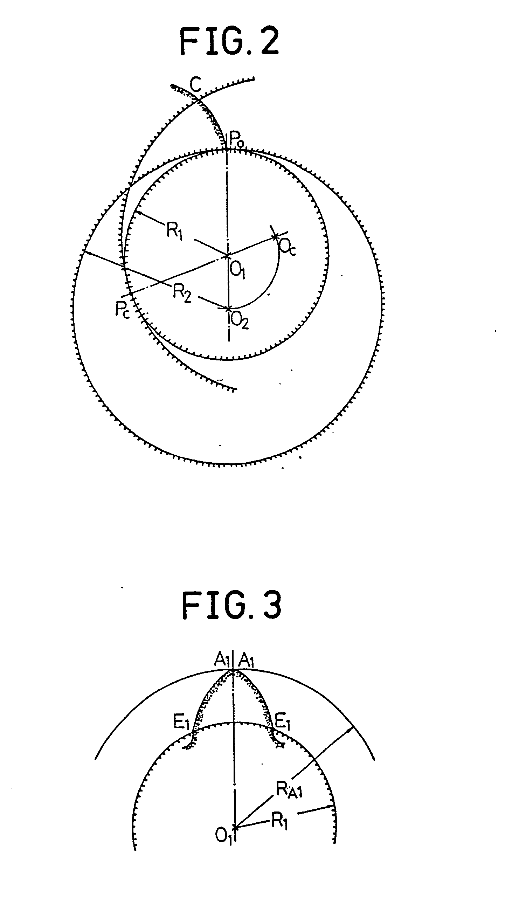

Fig. 2 shows a principle of generating of an epicycloidic curve based on the rolling movement of a pitch circle. In Fig. 2, it is supposed that a pitch circle of an external gear having a radius of $R_1$ or pitch circle $R_1$ which is initially contiguous to a pitch circle of an internal gear having a radius $R_2$ or pitch circle $R_2$ at a point $P_0$ carries out rolling movement, resulting in the contact point therebetween being changed from the point $P_0$ to a point $P_c$ and the initial contact point $P_0$ being moved to a position indicated by C in Fig. 2.

Locus formed or generated by the point C when the rolling movement of the pitch circle $R_2$ of the internal gear is successively carried out on the assumption described above is called an epicycloid curve. In this instance, when a tooth profile curve of the external gear is at the outside of the epicycloid curve, a tooth profile point on the pitch circle $R_2$ of the internal gear must pass through the tooth portion of the external gear. Such a phenomenon is a so-called interference or tooth profile interference. Thus, it is considered that the epicycloid curve provides an interference limiting line with respect to an addendum tooth profile of the external gear. In the present invention, such an epicycloid curve is named a limiting cycloid.

The use of such a limiting cycloid curve as inside and outside tooth profile curves for the external gear allows the addendum tooth profile of the external gear to be obtained. Fig. 3 shows a model of a tooth profile of the external gear obtained using the limiting cycloid. As apparent from the equation (1), an increase in absolute tooth number causes a reduction ratio to be increased. Thus, the tooth profile curve is desirably designed into a conical shape of which the inside and outside are symmetric with each other. In such an addendum curve as shown in Fig. 3, a bottom curve at the inside of a tooth profile point $E_1$ on the pitch circle $R_1$ may be formed by means of any suitable curve such as a circle arc, thus, the tooth profile curve is used to constitute only the portion between the pitch circle and an outer addendum circle of a radius $R_{A1}$. An increase in tooth height $(R_{A1}-R_1)$ causes an increase in contact ratio, thus it is desirable to decrease the thickness of the tooth top or the concentric portion

$$\overset{\frown}{A_1 \ A_1}$$

of the addendum circle as much as possible. However, the design of rendering the thickness zero often interferes with the machining. Thus, the thickness is desirably decreased as much as possible, to the extent that hindrance does not occur.

3

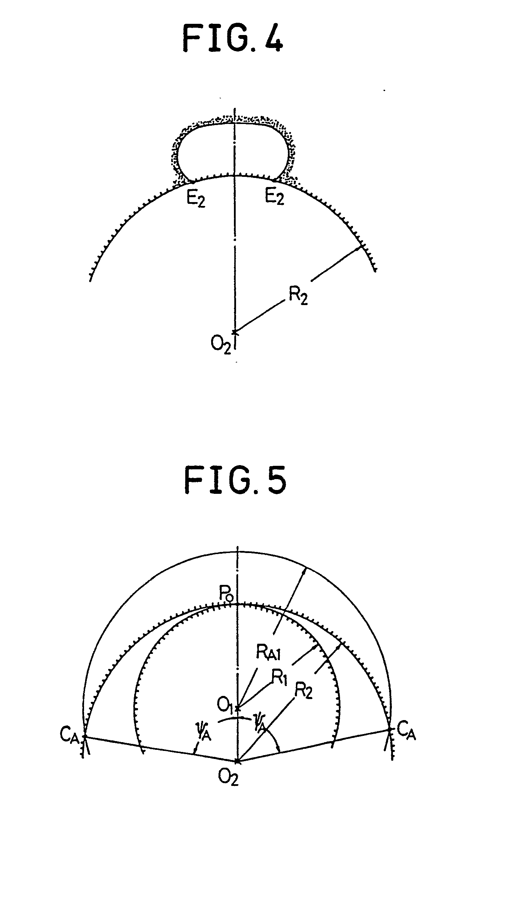

When the tooth profile curve of the external gear is designed or formed using the limiting cycloid, a tooth profile curve of the internal curve contacting with that of the external gear is formed on the basis of only a point on the pitch circle $R_2$. More particularly, as shown in Fig. 4, only a point $E_2$ on the tooth root is required to design the tooth profile curve. The remaining components required for the tooth profile curve are a tooth bottom curve formed in view of a relief and an inside concentric circle.

In connection with the engagement between the external gear and the internal gear, the following relationships are considered with reference to Fig. 5. More particularly, the phase angle $\Psi_A$ of the intersection $C_A$ between the addendum circle and the pitch circle $R_2$ of the internal gear is expressed by the following equation (2):

$$\Psi_A = \cos^{-1} \frac{R_2^2 + (R_2^2 - R_1^2) - R_A^2}{2R_2 (R_2 - R_1)} \qquad \text{--- (2)}$$

The contact ration $\varepsilon$ is calculated on the basis of the point $E_2$ on any one of both the inside and outside of the pitch circle of the internal gear within a range of $\pm\Psi_A$ according to the following equation (3):

$$\varepsilon = \frac{2\Psi_A}{2\pi/Z_2} = \frac{Z_2\Psi_A}{\pi} \qquad \text{--- (3)}$$

As can be seen from the foregoing, the formation of the tooth profile of the external gear using the limiting cycloid has a disadvantage that the tooth profile of the internal gear has a contact point which is not moved. However, it should be understood that it has an advantage of significantly increasing the contact ratio and substantially decreasing load burden of each tooth. Accordingly, it is desirable to design a tooth profile of an internal gear which is capable of effectively keeping the above-noted advantage and eliminating the above-described disadvantage.

It is justifiable to consider that even when a rigid gear is formed, the tooth is slightly deflected during the actual operation. Accordingly, the assumption of the tooth profile slightly different from the limiting cycloid would allow substantially the same contact ratio as in the limiting cycloid to be obtained during the actual operation. Also, the contact point of the internal gear can be moved depending upon a degree of the difference in tooth profile therebetween. However, since the deflection of the tooth occurs not in an elastic gear such as in Harmonic Drive Systems™ but in a rigid gear, the above-described requirements must be satisfied by a deflection of not more than approximately 10μm.

The present invention is to provide a mechanical reduction gear system including a gear having a tooth profile constructed to meet such requirements as described above. It has been found that such a tooth profile can be formed by applying the following conditions to an epitrochoid curve. More particularly, a rolling circle or generating circle is supposed which has a radius $R_{G1}$ smaller than that of $R_1$ of a pitch circle of an external circle. When $R_1 = Z_1M/2$ and $R_{G1} = Z_{G1}M/2$, the design is carried out to meet requirements as indicated by the following equation (4):

$$Z_1 - Z_{G1} \leqq 3 \qquad (4)$$

wherein $Z_1$ is an integer and $Z_{G1}$ is not necessarily an integer (M being the modulus).

The tooth root of the limiting cycloid has a pressure angle of 0, accordingly, a decrease in a pressure angle $\alpha_E$ at a point E on the epitrochoid curve allows the crossed axes angle between both curves at the point E to be reduced. Thus, the design is carried out to meet such requirements as indicated by the following equation (5):

$$\alpha_E = \cos^{-1} \frac{R_{G1}}{R_1} = \cos^{-1} \frac{Z_{G1}}{Z_1} \qquad \text{--- (5)}$$

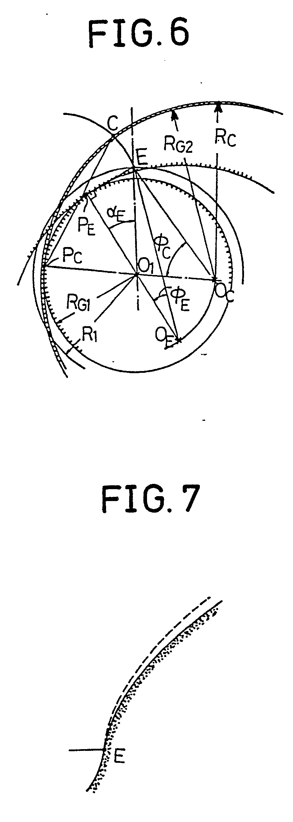

Then, relationships shown in Fig. 6 are considered. More particularly, a distance from the center of a circle having a radius $R_{G2}$ which rolls in contact with the circle $R_{G1}$ to a point of which locus is to be obtained is indicated by $R_c$, there are relationships therebetween which are indicated by the following equation (6):

$$\phi_E \simeq \tan^{-1} \frac{R_1 \sin\alpha_E}{R_{G2}} \simeq \cos^{-1} \frac{R_{G2}}{R_c} \qquad \text{--- (6)}$$

wherein $R_{G2}$ is determined by preliminary determination of the radius of the addendum circle of the limiting cycloid and that of the epitrochoid curve to allow the pressure angles of both addendum circles to be substantially equal to each other. The epitrochoid curve is obtained from the locus of a point C shown in Fig. 6 based on relationships indicated by the following equation (7):

$$\frac{\angle P_E O_1 E}{\angle P_C O_1 E} = \frac{\phi_E}{\phi_C} \qquad --- \quad (7)$$

The so-designed tooth profile, as shown in Fig. 7, has a curve which crosses the limiting cycloid curve indicated by dotted lines at a slight crossed axis angle at the point E on the tooth root and which moves gradually away from the limiting cycloid as it approaches the tooth top. The distance between both curves at the tooth top is very small, thus, it will be noted that it is readily carried out to design the tooth profile to allow the distance to be substantially equal to the deflection of the tooth during the actual loading operation.

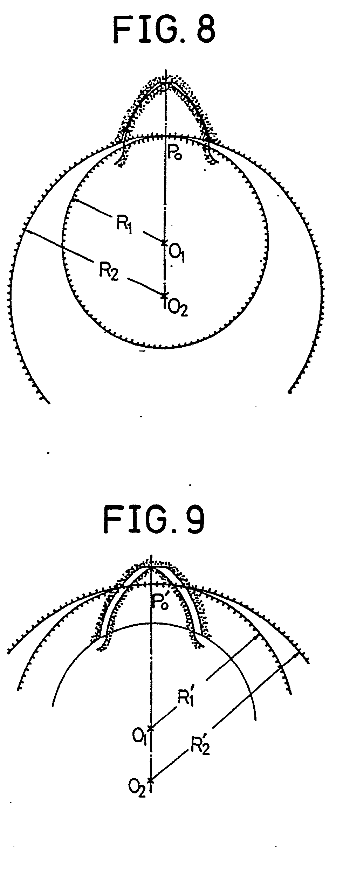

The tooth profile of the internal gear adapted to be engaged with the external gear having such a tooth profile as described above is obtained in the following matter. First, as the internal gear, a gear is supposed which has an addendum circle of a radius larger than that of the gear designed as described above, and the rolling of the initially schemed pitch circles having radius of $R_2$ and $R_1$ is considered. Under such conditions, the tooth profile of the pitch circle $R_2$ of the internal gear can be obtained by an envelope of the tooth profile of the pitch circle $R_1$ of the external gear which is formed by rolling the circle $R_1$ on the circle $R_2$ in Fig. 8. More particularly, the tooth profile of the internal gear is designed which has an operating pitch circle comprising the pitch circle $R_1$ of the external gear passing through the tooth root of the addendum circle of the external gear and the pitch circle $R_2$ of the internal gear contiguous thereto. In order to carry out such generation it is desirable that the tooth profile of the pitch circle $R_1$ of the external gear is formed to provide the tooth top with the concentric circle portion

$$\overset{\frown}{A_1 \, A_1}$$

as shown in Fig. 3 and the addendum circle of a slightly larger radius is formed to have a sharp tooth top.

The tooth profile curve of the internal gear may be generated to have a tooth profile having an operating pitch circle comprising pitch circles $R_1'$ and $R_2'$ larger in radius respectively than the pitch circles $R_1$ and $R_2$ which are substituted for the circles $R_1$ and $R_2$. In this instance, when the design is carried out in a manner such that first and second internal gears are engaged with one external gear in which an operating pitch circle in the engagement between the first internal gear and the external gear comprises the pitch circles $R_1$ and $R_2$ and an operating pitch circle in the engagement between the second internal gear and the external gear comprises the pitch circles $R_1'$ and $R_2'$ wherein $R_1' > R_1$, $R_2' > R_2$, and

$$R_2 - R_1 = R_2' - R_1' \qquad (8),$$

a so-called magic gear mechanism is designed which allows two internal gears different in tooth number from each other, to be concurrently engaged with a single small gear. This permits the number of epicyclic external gears for the differential epicyclic gear mechanism to be only one. In this instance, it is required to limit the difference between the radii $R_1'$ and $R_1$ within a certain range because the engagement between the pitch circles $R_2'$ and $R_1'$ is decreased in contact ratio as compared with that between the pitch circles $R_2$ and $R_1$.

As described above, the present invention uses the epitrochoid curve with respect to the rolling circle or generating circle slightly smaller in radius than the pitch circle as a tooth profile curve and also uses the external gear of which the pressure angle is substantially minimum on the pitch circle. This allows the gear to be not only substantially increased in contact ratio in spite of being rigid but highly improved in operating contact under loading. Thus, it will be noted that the present invention can effectively provide a mechanical reduction gear system which is suitable for use for obtaining large output and substantial reduction.

### Claims

1. A mechanical reduction gear system comprising an external gear (16) which is rotatable about an ecentrically revolving shaft (14) and an internal ring gear (18) engaged with said external gear (16) characterised in that said external gear (16) has a tooth profile curve which is the combination of an addendum tooth profile curve outside the pitch circle and an epicycloid curve inside the pitch circle that is generated on the basis of a rolling or generating circle having a theoretical tooth number that is fewer by up to three than the tooth number of said pitch circle wherein said external gear (16) has a pressure angle ($\alpha_E$) determined from the expression.

$$\cos^{-1} \frac{\text{radius of the rolling circle}}{\text{radius of the pitch circle}}$$

on said pitch circle and that said internal ring gear (18) has a tooth profile curve inside the pitch circle which is generated on the basis of the tooth profile of said external gear (16).

2. A mechanical reduction gear system as defined in Claim 1, characterised in that said external gear (16) has a very small tooth top thickness ($A_1-A_1$).

3. A mechanical reduction gear system as claimed in Claim 1 or 2, characterised in that said external gear (16) and intenal ring gear (18), when the radius of said pitch circle of said external gear (16) passing through the tooth root of an addendum tooth profile of said external gear (16) is indicated by $R_1$ and the radius of a pitch circle of said internal gear (18), is indicated by $R_2$, are engaged with each other on an operating pitch circle comprising pitch circles having radii $R_1'$ and $R_2'$ which have the following relationships to the radii $R_1$ and $R_2$:

$R_1'>R_1$;
$R_2'>R_2$; and
$R_2-R_1=R_2'-R_1'$.

4. A mechanical reduction gear system as claimed in Claim 1 or 2, characterised in that the number of said external gear (16) is one and said internal gear (18) comprises a first internal gear and a second internal gear which are different in tooth number from each other and engaged with said single external gear (16);

said external gear (16), in the engagement with said first internal gear, having a tooth profile which has an operating pitch circle comprising a pitch circle of said external circle having a radius $R_1$ and passing through the tooth root of an addendum tooth profile of said external gear (16) and a pitch circle of said internal gear having a radius $R_2$ and contiguous to said pitch circle of said external circle;

said external gear (16), in the engagement with said second internal gear, having a tooth profile which allows said external gear (16) to engage with said internal gear on an operating circle comprising pitch circles having radii $R_1'$ and $R_2'$ which have the following relationships to the radii $R_1$ and $R_2$:

$R_1'>R_1$;
$R_2'>R_2$; and
$R_2-R_1=R_2'-R_1'$.

**Patentansprüche**

1. Mechanisches Untersetzungsgetriebe, mit einem Außenrad (16), das um eine exzentrisch umlaufende Welle (14) drehbar ist, und einem Innenringrad (18), das mit dem Außenrad (16) im Eingriff steht, dadurch gekennzeichnet, daß das Außenrad (16) einen Zahnprofilverlauf hat, welcher sich aus einem Zahnkopfprofilverlauf außerhalb des Teilkreises und einem Epizykloidverlauf innerhalb des Teilkreises zusammensetzt, der auf der Basis eines Wälz- oder Erzeugungskreises mit einer theoretischen Zähnezahl erzeugt wird, die um bis zu drei kleiner als die Zähnezahl des Teilkreises ist, wobei das Außenrad (16) einen Eingriffswinkel ($\alpha$) am Teilkreis gemäß dem Ausdruck

$$\text{arc cos} \frac{\text{Radius des Wälzkreises}}{\text{Radius des Teilkreises}}$$

hat und das Innenringrad (18) einen Zahnprofilverlauf innerhalb des Teilkreises aufweist, der auf der Basis des Zahnprofils des Außenrades (16) erzeugt wird.

2. Mechanisches Untersetzungsgetriebe nach Anspruch 1, dadurch gekennzeichnet, daß das Außenrad (16) eine sehr schmale Zahnkopfbreite ($A_1-A_1$) hat.

3. Mechanisches Untersetzungsgetriebe nach Anspruch 1 oder 2, dadurch gekennzeichnet, daß — bei Bezeichnung des Teilkreis-Radius des Außenrades (16) am Durchgang durch den Zahnfuß eines Zahnkopfprofiles des Außenrades (16) mit $R_1$ und des Teilkreis-Radius des Innenrades (18) mit $R_2$ — das Außenrad (16) und das Innenringrad (18) miteinander an einem effektiven Teilkreis im Eingriff stehen, der Teilkreise der Radien $R_1'$ bzw. $R_2'$ mit folgenden Beziehungen zu den Radien $R_1$ bzw. $R_2$ aufweist:

$R_1'>R_1$;
$R_2'>R_2$; sowie
$R_2-R_1=R_2'-R_1'$.

4. Mechanisches Untersetzungsgetriebe nach Anspruch 1 oder 2, dadurch gekennzeichnet,

daß die (Zähne-)Zahl des Außenrades (16) eins ist und daß das Innenrad (18) ein erstes sowie ein zweites Innenrad aufweist, die sich in der Zähnezahl unterscheiden und mit dem einen Außenrad (16) im Eingriff stehen;

daß das mit dem ersten Innenrad im Eingriff stehende Außenrad (16) ein Zahnprofil mit einem effektiven Teilkreis aufweist, der einen Außenrad-Teilkreis mit dem Radius $R_1$, welcher durch den Zahnfuß eines Zahnkopfprofils des Außenrades (16) hindurchgeht, sowie einen Innenrad-Teilkreis mit dem Radius $R_2$ hat, der den Außenrad-Teilkreis berührt; (und)

daß das mit dem zweiten Innenrad im Eingriff stehende Außenrad (16) ein Zahnprofil hat, das dem Außenrad (16) einen Eingriff an dem Innenrad an einem effektiven Kreis mit Teilkreisen der Radien $R_1'$ bzw. $R_2'$ erlaubt, welche in folgenden Beziehungen zu den Radien $R_1$ bzw. $R_2$ stehen:

$R_1' > R_1$;
$R_2' > R_2$; sowie
$R_2 - R_1 = R_2' - R_1'$.

**Revendications**

1. Système mécanique d'engrenages réducteurs comportant un engrenage à denture extérieure (16) tournant autour d'un axe à rotation excentrique (14) et une couronne à denture intérieure (18) engrenant avec ledit engrenage à denture extéarieure (16), caractérisé en ce que ledit engrenage à denture extérieure (16) présente une courbe de profil de dent qui est la combinaison d'une courbe de profil de tête à l'extérieur du cercle primitif et d'une courbe épicycloïdale à l'intérieur de cercle primitif qui est engendrée à partir d'un cercle de roulement ou générateur ayant un nombre de dents théorique inférieur de trois au plus au nombre de dents dudit cercle primitif, dans lequel ledit engrenage à denture extérieure (16) présente un angle de pression (x) déterminé à partir de l'expression:

$$\cos x = \frac{\text{rayon de cercle de roulement}}{\text{rayon du cercle primitif}}$$

sur ledit cercle primitif et en ce que ladite couronne à denture intérieure (18) présente une courbe de profil de dent à l'intérieur du cercle primitif qui est engendrée à partir du profit de dent dudit engrenage à denture extérieure (16).

2. Système mécanique d'engrenages réducteurs selon la revendication 1, caractérisé en ce que ledit engrenage à denture extérieure (16) présente une très faible épaisseur de tête de dent $(A_1 - A_1)$.

3. Système mécanique d'engrenage réducteurs selon la revendication 1 ou 2, caractérisé en ce que ledit engrenage à denture extérieure (16) et ladite couronne à denture intérieure (18), si le rayon dudit cercle primitif dudit engrenage à denture extérieure (16) est désigné par $R_1$ et si le rayon du cercle primitif de ladite couronne à denture intérieure (18) est désigné par $R_2$, engrènent l'un avec l'autre suivant un ensemble primitif de fonctionnement comportant des cercles primitifs présentant des rayons $R_1'$ et $R_2'$ qui remplissent les relations suivantes avec les rayons $R_1$ et $R_2$:

$R_1' > R_1$;
$R_2' > R_2$; et
$R_2 - R_1 = R_2' - R_1'$.

4. Système mécanique d'engrenages réducteurs selon la revendication 1 ou 2, caractérisé en ce que le nombre desdits engrenages à denture extérieure (16) est de un en ce que lesdites couronnes à denture intérieure (18) comprennent une première couronne à denture intérieure et une seconde couronne à denture intérieure dont le nombre des dents est différent de l'une à l'autre et qui engrènent avec un seul engrenage à denture extérieure (16), ledit engrenage à denture extérieure (16) ayant, dans l'engrènement avec ladite première couronne à denture intérieure, un profit de dent qui présente un ensemble primitif de fonctionnement comprenant un cercle primitif dudit engrenage à denture extérieure ayant un rayon $R_1$ et passant par le pied de dent d'un profil de tête de dent dudit engrenage à denture extérieure (16) et un cercle primitif de ladite couronne à denture intérieure ayant un rayon $R_2$ et contigü audit cercle primitif dudit engrenage à denture extérieure, ledit engrenage à denture extérieure (16) ayant, dans l'engrènement avec ladite seconde couronne à denture intérieure, un profit de dent qui permet audit engrenage à denture extérieure (16) d'engrener avec ladite couronne à denture extérieure suivant un ensemble de fonctionnement comprenant des cercles primitifs ayant des rayons $R_1'$ et $R_2'$ qui remplissent les relations suivantes avec les rayons $R_1$ et $R_2$:

$R_1' > R_1$;
$R_2' > R_2$; et
$R_2 - R_1 = R_2' - R_1'$.

7

0 161 072

# FIG.1 (a)

PRIOR ART

# FIG.1 (b)

PRIOR ART

1

0 161 072

# FIG. 2

# FIG. 3

# FIG. 4

# FIG. 5

# FIG.6

# FIG.7

# FIG. 8

# FIG. 9